Europäisches Patentamt

European Patent Office

Office européen des brevets

(11) Publication number: **0 076 675**

**A1**

# (12) EUROPEAN PATENT APPLICATION

(21) Application number: **82305251.9**

(22) Date of filing: **04.10.82**

(51) Int. Cl.³: **B 23 K 1/20**
**B 23 K 33/00**

(30) Priority: **02.10.81 US 307813**

(43) Date of publication of application:
**13.04.83 Bulletin 83/15**

(84) Designated Contracting States:
**DE FR GB IT**

(71) Applicant: **FORD MOTOR COMPANY LIMITED**
**Eagle Way**
**Brentwood Essex CM13 3BW(GB)**

(84) Designated Contracting States:
**GB**

(71) Applicant: **FORD-WERKE AKTIENGESELLSCHAFT**
**Ottoplatz 2 Postfach 21 03 69**
**D-5000 Köln 21(DE)**

(84) Designated Contracting States:
**DE**

(71) Applicant: **FORD FRANCE SOCIETE ANONYME**
**344 Avenue Napoléon Bonaparte B.P. 307**
**F-92506 Rueil Malmaison Cedex(FR)**

(84) Designated Contracting States:
**FR**

(71) Applicant: **Ford Motor Company**
**The American Road**
**Dearborn MI 48121(US)**

(84) Designated Contracting States:
**IT**

(72) Inventor: **Rhodes, Eugene E.**
**45221 Harmony Lane**
**Belleville Michigan 48111(US)**

(74) Representative: **Messulam, Alec Moses et al,**
**A. Messulam & Co. 24 Broadway**
**Leigh on Sea Essex SS9 1BN(GB)**

(54) **Method of soldering a tube to a header.**

(57) To solder a tube (12) to a header (10) an opening (14) is formed through the header. The opening formed has a cross-section of the same shape and size as the cross-section of the tube or tubes to be soldered thereto. A depressed area (16) is formed along at least a portion of each of the openings through the header. A tube is inserted through each opening through the header. The header is arranged with the depressed area along each of the openings facing generally upwardly. A premeasured amount of solid solder (22) is placed in flowable association with each of the depressed areas, so that when it is melted in will flow into the depressed areas with which it is associated. Each of the premeasured amounts of solder is heated to liquify the solder which flows into the depressed areas. Thereafter, the melted solder is allowed to solidify. In this way the amount of solder employed is minimised.

FIG. 2.

## METHOD OF SOLDERING A TUBE TO A HEADER

This invention relates to a method of soldering a tube to a header, in particular for use in radiator construction. Such radiators have particular utility for use as the cooling device associated with the cooling fluids for an internal combustion engine.

The method of soldering a tube to a header which is disclosed and claimed in this specification constitutes a new approach to such a soldering operation. The new approach is one which, while producing effective solder joints between the mentioned elements, can do so by the use of less solder than was heretofore required to accomplish such a soldering operation. Because less solder need be used, the method, of course, can be less expensive and can thus produce a final structure at a lower unit cost.

The present process for soldering a tube to a header in order to form a radiator construction is one in which an opening is formed through a header. A depressed area is formed along the opening and a tube is inserted through that opening. Molten solder from a molten solder bath is pumped over the header at a solder application station. Some of the solder becomes trapped in the depressed area while flowing thereover back to the solder bath. The solder retained in the depressed area is allowed to cool and solidify, thereby to form the solder bond between the tube and the header.

Because of the surface tension effects found in a liquid solder system, generally much more solder than is required to form a solder bond is retained in the depressed area associated with each tube passing through the header. The additional solder does ensure a very good solder joint being formed but it wastes solder, which increases cost per unit and also increases the weight of the unit. Thus, this type of solder operation, while effective in forming a joint, is economically unfavourable and it results in a finished unit which weights more than it would reasonably have to if the soldering operation was accomplished with just an amount of solder sufficient to form a good solder bond.

According to the present invention, there is provided a method of soldering a tube to a header which comprises the steps of forming at least one opening through the header, said opening having a cross-section of the same shape and size as the cross-section of the tube , forming a depressed area along at least a portion of each of said openings through the header, inserting a tube through each of said openings through the header, and flowing solder into the depression surrounding each tube, characterised in that the soldering includes the steps of orienting the header and any tubes inserted therein in a manner that said depressed areas along each of said openings formed in the header are facing generally upwardly, placing a premeasured amount of solid solder bonding material in flowable association with each of said depressed areas, heating each of said premeasured amounts of solder bonding material to melt the same thereby having such solder liquify and flow into said depressed areas with which it is flowably associated and cooling said melted solder bonding material in each of said depressed areas thereby to solidify the same and cause a bonding of the tube passing through that depressed area with the header.

The invention will now be further described, by way of example, with reference to the accompanying drawings, in which:

Figure 1 is a plan view of a device used to carry out a soldering method of this invention,

Figure 2 is an elevational view of a tube inserted in a header and is a view taken along the line II-II of Figure 1,

Figure 3 is an elevational view of a portion of the device shown in Figure 1 and is a view taken along the line III-III of Figure 1,

Figure 4 is an elevational view of the device shown in Figure 1 used to carry out some of the steps of the method of this invention, and

Figure 5 is an elevational view, partly in cross-section, taken in the direction of arrow A of Figure 4.

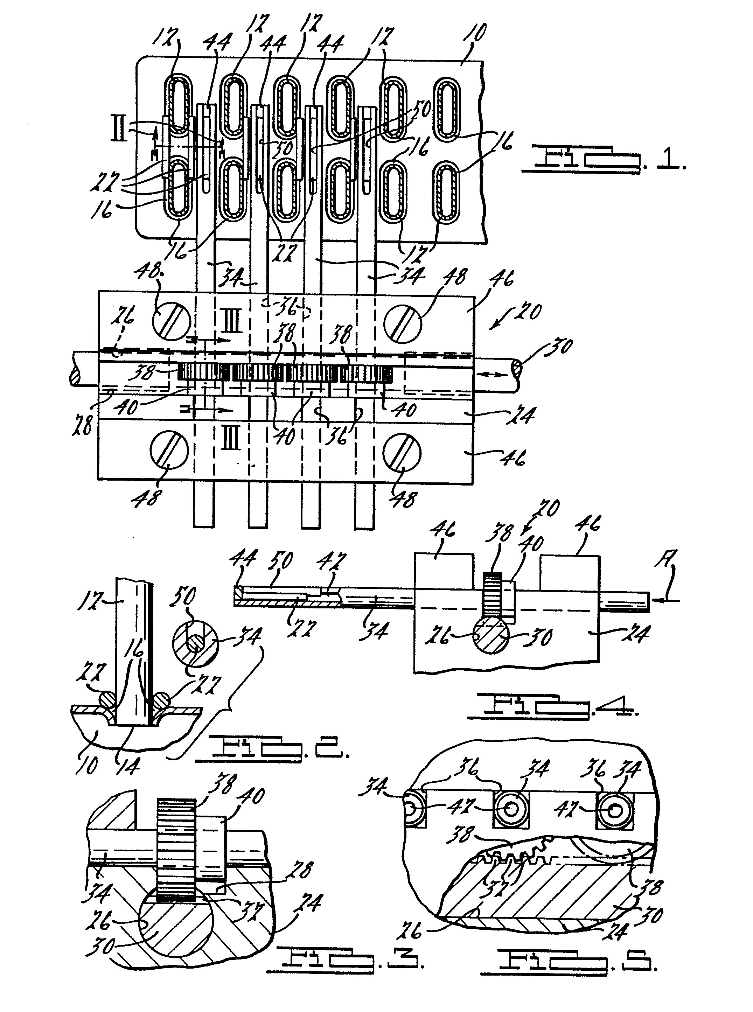

In Figures 1 and 2, there is seen a header 10 to which a plurality of tubes 12 will be soldered. While not shown in the drawing, but as is readily understood by a skilled artisan, there is in a radiator construction generally an upper header and a lower header, both headers being essentially closed volumes except for tubes travelling therebetween and entrance and exit ports from the respective headers. Heater fluid flows into one header then through the plurality of tubes to the second header and exits from the second header. During the passage from the first header to the second header, heat is lost from the cooling fluid to heat transfer fins located between adjacent tubes (not shown), which in turn transfer the heat to the ambient air. Since radiator constructions are well known in the art, no further discussion will be undertaken.

As will best be understood by viewing Figure 2, a plurality of openings 14 (only one shown in Figure 2) are formed in the header 10. These openings are formed so as to have a cross-section in the plane view of Figure 1, which is essentially the same shape and size as the tube 12 which is to pass therethrough. As is also shown in Figure 2, when the openings 14 are formed, for example, by a punching operation, a depressed area 16 is left along at least a portion of each of the openings through the header. In this preferred embodiment, the depressed area extends around the entire perimeter of each of the openings 14.

A plurality of tubes 12 are positioned one in each opening 14 of the header 10 in the manner best shown in Figure 2. The tubes inserted into the header 10 are oriented in a manner such that the depressed areas 16 along each of the openings 14 formed in the header 10 are generally facing upward for the soldering operation. The tubes 12 are made from a material such as aluminium and the header 10 is made from brass, which can easily be soldered together by a soldering composition formed from lead and tin.

The next step is accomplished by means of a solid solder bonding material dispensing device generally designated by the numeral 20. Basically, this dispensing device 20 is designed to dispense rod-like lengths of a solder bonding material 22 (hereinafter referred to simply as solder).

The dispensing device 20 includes a base block 24 which has a round passageway 26 and a rectangular passageway 28 formed therethrough from left to right as viewed in Figure 1 and into and out of the drawings of Figure 3 and Figure 4. The round passageway has a sliding element 30 mounted for movement therein. The sliding element 30 has a plurality of upwardly facing gear teeth 32 formed thereon for a purpose to be described later. These gear teeth are best seen in Figure 5.

A plurality of rotatable fingers 34 are mounted for rotation in slots 36 formed in the top of the base block 24 as is best seen in Figures 5 and 1. Encircling the portion of each of the rotatable fingers 34 overlying the rectangular passageway 28 of the base block 24 is a gear tooth element 38 and a locator element 40. As best seen in Figures 3 and 5, each of the gear tooth elements 38 is at least in part in meshing relationship with a portion of the gear teeth 32 on the sliding element 30. Thus, as the sliding element is moved into and out of its associated round passageway 26 in the base block 24, the motion is transmitted through its gear drive to rotate the rotatable fingers 34 to the left, to a neutral position, and then to the right. As may best be seen in Figures 4 and 5, the rotatable fingers have a central opening therethrough except that this central opening is blocked by a blocking member 44 at the free end of the rotatable fingers 34.

The rotatable fingers 34 and their associated gear tooth elements 38 are held in proper position in the structure by means of upper locking blocks 46 (best seen in Figures 1 and 4) which are attached by means of fasteners 48 to the base block 24. The locator elements 40 are used so that the rotatable finger associated therewith is held in its proper position within the rectangular passageway 28 of the base block 24. This locating of the rotatable fingers 34 thus ensures that openings 50 formed in the free ends of the rotatable fingers and shown in Figures 1 and 4 are properly located for the delivery of individual rod-like solder bonding material 22 in a manner which will be described hereinafter.

The dispensing device 20 is positioned so that the rotatable fingers 34 are positioned as shown in Figure 1 between spaced pairs of tubes 12 passing through the header 10. The sliding element 30 is first moved to the right as viewed in Figure 1, whereby the rotatable fingers are rotated to the left because of the cooperation of the gear tooth elements 38 and the gear teeth 32 formed on the sliding element 30. Rotation of the rotatable fingers 34 to the left is through an arc sufficient to permit a solder blank 22 to roll out of each of the rotatable fingers through the openings 50 therein. This deposits a solder blank 22 in flowable association with a pair of the depressed areas 16 formed around the openings 14 in the header 10. "Flowable association" means that when the solder is subsequently melted, it will run by gravity forces from its position fully into the depressed areas 16 with which it is associated.

The sliding element 30 is then moved to the left as viewed in Figure 1, whereby the rotatable fingers 34 are rotated through an arc to the right to once again deposit solder blanks 22 in flowable association with the depressed areas 16 on the right side thereof. The solder blanks are advanced to the discharge position by moving them through the central opening 42 formed in each of the rotatable fingers 34. The solder blanks 22 may be delivered one at a time to the free ends of the rotatable fingers 34 for dispensing through the openings 50, or they may be backed up one against the other all the way through the entire length of the central opening by some type of automatic feed mechanism (not shown). By dispensing predetermined sized solder slugs, the exact amount of solder which is used in soldering each tube 12 to the header 10 is controlled. In this manner, excessive solder is not used; which results in cost and weight savings for the entire structure. Also, there is no overflow of molten solder onto other portions of the structure, which could cause trouble.

After the solder slugs have been dispensed throughout the entire device, the predetermined amounts of solder 22 are heated to melt them so that they may flow into associated ones of the depressed areas 16. The molten solder fills the associated depressed areas 16 to a depth which ensures that a good solder bond will be formed between the tube 12 and the header 10 at that depressed area.

The entire assembly is now cooled so that the melted solder will solidify. When the solder solidifies, it causes a bonding of the tube passing through the depressed area with the header 10.

Calculations show that this soldering method will save approximately 30-40% of the solder previously used in such a soldering operation, and yet will produce a structure in which the solder bonds are every bit as good as the solder bonds obtained with the prior art process. Also, the structure will be lighter because less solder is used in the soldering operation.

## CLAIMS

1. A method of soldering a tube to a header which comprises the steps of forming at least one opening (14) through the header (10), said opening having a cross-section of the same shape and size as the cross-section of the tube (12), forming a depressed area along at least a portion of each of said openings through the header, inserting a tube (12) through each of said openings through the header, and flowing solder into the depression surrounding each tube, characterised in that the soldering includes the steps of orienting the header (10) and any tubes inserted therein in a manner that said depressed areas along each of said openings formed in the header are facing generally upwardly, placing a premeasured amount of solid solder bonding material (22) in flowable association with each of said depressed areas, heating each of said premeasured amounts of solder bonding material to melt the same thereby having such solder liquify and flow into said depressed areas with which it is flowably associated and cooling said melted solder bonding material in each of said depressed areas thereby to solidify the same and cause a bonding of the tube passing through that depressed area with the header.

2. A method as claimed in Claim 1, wherein a plurality of openings (14) are provided in the header (10) and a tube (12) passes through each of said plurality of openings.

3. A method as claimed in Claim 1 or 2, wherein said depressed area (16) is formed along the entire extent of each of said openings (14) formed through the header (10).

FIG.1.

FIG.2.

FIG.3.

FIG.4.

FIG.5.

| Category | Citation of document with indication, where appropriate, of relevant passages | Relevant to claim |
|---|---|---|
| X | <u>DE - C - 435 501</u> (S.A. DES USINES CHAUSSON) * complete document * | 1-3 |
| | -- | |
| X | <u>DE - C - 1 079 427</u> (J. WERNER) * column 2, line 47; fig. * | 1-3 |
| | -- | |
| A | <u>US - A - 3 496 629</u> (J. A. MARTUCCI et al.) * complete document * | 1-3 |
| | -- | |
| A | E. LÜDER,"Handbuch der Löttechnik" 1952, VERLAG TECHNIK BERLIN * pages 321, 322; fig. 364 * | 1-3 |
| | -- | |
| A | <u>FR - E - 13 928</u> (J. BOELEN) * fig. * | 1 |
| | ---- | |

**DOCUMENTS CONSIDERED TO BE RELEVANT**

**CLASSIFICATION OF THE APPLICATION (Int. Cl. 3)**

B 23 K   1/20
B 23 K 33/00

**TECHNICAL FIELDS SEARCHED (Int.Cl. 3)**

B 23 K   1/00
B 23 K   3/00
B 23 K 31/00
B 23 K 33/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 29-12-1982 | WUNDERLICH |

EPO Form 1503.1  06.78